# EUROPÄISCHE PATENTSCHRIFT

(11) **EP 4 218 416 B1**
(45) Veröffentlichungstag und Bekanntmachung des Hinweises auf die Patenterteilung: **15.04.2026**
(21) Anmeldenummer: 23154300.0
(22) Anmeldetag: 31.01.2023
(51) Int. Cl.: A22C 7/00

(54) **MANUELLE FLEISCHPRESSE**
MANUAL MEAT PRESS
PRESSE MANUELLE POUR LA VIANDE

(30) Priorität: 01.02.2022 DE 202022100553 U
(43) Veröffentlichungstag der Anmeldung: 02.08.2023
(73) Patentinhaber: Walter, Stephan, 83253 Rimsting (DE)
(72) Erfinder: Walter, Stephan, 83253 Rimsting (DE)
(74) Vertreter: Flach Bauer & Partner Patentanwälte mbB

(56) Entgegenhaltungen:
- DE-U1- 8 610 688
- US-A1- 2006 078 642

## Beschreibung

Die Erfindung betrifft eine manuelle Fleischpresse für Fleischstücke gemäß dem Oberbegriff des Anspruchs 1.

Fleischstücke, die zum Zubereiten von Speisen wie beispielsweise Wiener Schnitzel, Schnitzel Wiener Art, Rolladen oder Cordon bleu verwendet werden, werden üblicherweise vor dem Braten mittels eines Fleischhammers geklopft, um eine gleichmäßige Dicke der Fleischstücke zu erreichen und zu verhindern, dass sich das Fleisch beim Braten zusammenzieht. Ein derartiges manuelles Klopfen ist zeitaufwendig und umständlich und bringt auch nicht immer die gewünschten qualitativen Resultate.

Es sind ferner manuelle Fleischpressen bekannt, bei denen das Fleischstück auf eine Auflageplatte gelegt und eine darüber angeordnete Anpressplatte mittels eines Betätigungshebels auf das Fleischstück gepresst wird. Derartige bekannte Fleischpressen sind häufig nicht auf die gewünschte einfache und leichte Art zu bedienen oder sind teuer in Herstellung und Anschaffung.

US 2006/078 642 A1 betrifft eine Pattie-Formvorrichtung. Die Vorrichtung umfasst ein Element zum Einstellen des Volumens einer Formkammer, um das ungefähre Gewicht eines Patties voreinzustellen.

DE 86 10 688 U1 betrifft eine mechanische Schinkenpresse zur Bearbeitung von Roh- und Kochschinken.

Der Erfindung liegt daher die Aufgabe zugrunde, eine manuelle Fleischpresse gemäß dem Oberbegriff des Anspruchs 1 zu schaffen, die einfach, leicht und intuitiv zu bedienen ist, besonders exakte Pressergebnisse liefert und kostengünstig herzustellen ist.

Diese Aufgabe wird durch eine manuelle Fleischpresse mit den Merkmalen des Anspruchs 1 gelöst. Vorteilhafte Ausführungsformen der Erfindung sind in den weiteren Ansprüchen beschrieben.

Die erfindungsgemäße Fleischpresse weist folgende Merkmale auf:
- eine stationäre Haltekonsole,
- eine mit der stationären Haltekonsole verbundene Auflageplatte zum Auflegen der Fleischstücke,
- eine Anpressplatte, die zwischen einer von der Auflageplatte maximal entfernten Öffnungsposition und einer unteren Endposition bewegbar ist, in der die Anpressplatte einen Minimalabstand zur Auflageplatte einnimmt,
- eine Hubeinrichtung zum Bewegen der Anpressplatte zwischen einer oberen Hubposition und der unteren Endposition über einen sich bis zur unteren Endposition erstreckenden Hubweg, bei dem die Anpressplatte parallel zur Auflageplatte ausgerichtet ist,
- einen Betätigungshebel zum manuellen Bewegen der Anpressplatte relativ zur Auflageplatte,
- wobei die Hubeinrichtung, mit der die Anpressplatte in einer zur Auflageplatte parallelen Ausrichtung bewegbar ist, an einem Schwenkarm befestigt ist, der um eine horizontale Schwenkachse schwenkbar an der stationären Haltekonsole gelagert und zwischen einer hochgeschwenkten Ausgangsposition, in der die Anpressplatte ihre maximale Öffnungsposition einnimmt, und einer unteren Schwenkposition schwenkbar ist, in der die Anpressplatte parallel zur Auflageplatte und in einer oberhalb ihrer unteren Endposition liegenden Zwischenposition angeordnet ist.

Die erfindungsgemäße Fleischpresse ist besonders einfach, leicht und intuitiv zu bedienen. Dies resultiert insbesondere daraus, dass sowohl die Schwenkbewegung des Schwenkarms, mit der die Anpressplatte zwischen der maximalen Öffnungsposition und der abgesenkten Zwischenposition bewegbar ist, als auch die Betätigung der Hubeinrichtung, mit der eine hohe Presskraft auf die Fleischstücke aufgebracht werden kann, mittels einer einzigen fließenden Bewegung des Betätigungshebels in derselben Vertikalebene ausführbar sind. Mit anderen Worten: der Betätigungshebel muss nur kontinuierlich nach unten bzw. nach oben geschwenkt werden, um den Pressvorgang auszuführen bzw. die Fleischpresse für den nächsten Beladevorgang maximal zu öffnen. Das Pressen der Fleischstücke kann dabei sehr exakt, schnell und mit geringem Kraftaufwand durchgeführt werden. Der Platzbedarf für die Fleischpresse ist gering. Weiterhin ist die erfindungsgemäße Fleischpresse kostengünstig herzustellen.

Gemäß der Erfindung steht der Betätigungshebel sowohl mit dem Schwenkarm als auch mit der Hubeinrichtung in Wirkverbindung, derart, dass, ausgehend von einer maximalen Öffnungsposition der Fleischpresse, ein manuelles Schwenken des Betätigungshebels über einen ersten Schwenkbereich zunächst eine Schwenkbewegung des Schwenkarms von seiner hochgeschwenkten Ausgangsposition in seine untere Schwenkposition bewirkt, ohne die Anpressplatte mittels der Hubeinrichtung in ihre untere Endposition zu bewegen, und ein manuelles Schwenken des Betätigungshebels über einen an den ersten Schwenkbereich anschließenden zweiten Schwenkbereich eine Betätigung der Hubeinrichtung bewirkt, derart, dass die Anpressplatte längs des Hubwegs parallel zur Auflageplatte in ihre untere Endposition bewegt wird. Durch eine derartige Ausgestaltung ist sichergestellt, dass die Schwenkbewegung des Schwenkarms und die Betätigung der Hubeinrichtung auf besonders einfache Weise unmittelbar nacheinander ausgeführt werden können.

Gemäß einer vorteilhaften Ausführungsform umfasst die Hubeinrichtung einen mit der Anpressplatte verbundenen Führungskolben, der in einer Führungshülse des Schwenkarms längsverschiebbar geführt ist. Hierdurch kann die Anpressplatte exakt am Schwenkarm geführt und relativ zu diesem verschoben werden.

Gemäß einer vorteilhaften Ausführungsform umfasst die Hubeinrichtung einen Hubeinrichtungs-Kniehebel zum Verschieben des Führungskolbens relativ zum Schwenkarm, wobei der Hubeinrichtungs-Kniehebel mittels des Betätigungshebels betätigbar ist. Mittels eines derartigen Hubeinrichtungs-Kniehebels kann die Anpressplatte mittels des Betätigungshebels entsprechend dem Kniehebelprinzip von der abgesenkten Zwischenposition zunächst schnell und anschließend langsamer, jedoch mit großer Kraft, in ihre untere Endposition bewegt werden. Dies ermöglicht sowohl eine schnelle Handhabung der Fleischpresse als auch das Aufbringen einer hohen Presskraft am Ende des Presswegs.

Gemäß einer vorteilhaften Ausführungsform ist der Betätigungshebel schwenkbar am Schwenkarm gelagert und drehfest mit einem ersten Kniehebelelement des Hubeinrichtungs-Kniehebels verbunden, während ein zweites Kniehebelelement des Hubeinrichtungs-Kniehebels einerseits mit dem Führungskolben und andererseits mit dem ersten Kniehebelelement gekoppelt ist. Hierdurch ist ein einfaches und wirkungsvolles Kniehebelprinzip realisierbar, bei dem die Anpresskraft mit zunehmender Annäherung der Anpressplatte an ihre untere Endposition stark ansteigt.

Gemäß einer vorteilhaften Ausführungsform wirkt der Hubeinrichtungs-Kniehebel mit einem Anschlag zusammen, der eine Winkelstellung des ersten und zweiten Kniehebelelements relativ zueinander auf maximal 180°, vorzugsweise auf 160° bis 180°, begrenzt. Hierdurch wird die Absenkbewegung der Hubeinrichtung und damit diejenige der Anpressplatte in einer genau definierten Höhenposition, d. h. in der unteren Endposition, gestoppt, in der die Anpressplatte einen exakt definierten Abstand zur Auflageplatte einnimmt. Eine genau definierte Pressdicke des Fleischstücks kann auf diese Weise sehr einfach dadurch erreicht werden, dass der Betätigungshebel nach unten gedrückt wird, bis die weitere Schwenkbewegung des Betätigungshebels durch den Anschlag blockiert wird.

Gemäß einer vorteilhaften Ausführungsform ist der Schwenkarm in seiner unteren Schwenkposition, in welcher die Anpressplatte die Zwischenposition einnimmt, mittels einer Verriegelungseinrichtung verriegelbar, die eine Schwenkbewegung des Schwenkarms blockiert. Hierdurch kann auf einfache Weise der Schwenkarm in seiner unteren Schwenkposition, in welcher die Anpressplatte parallel zur Auflageplatte ausgerichtet ist, verriegelt werden, so dass der Schwenkarm stationär fixiert ist und am Hochschwenken gehindert wird, wenn die Anpressplatte mittels der Hubeinrichtung auf das Fleischstück gepresst wird und die Gegenkraft vom Schwenkarm aufgenommen werden muss.

Gemäß einer vorteilhaften Ausführungsform umfasst die Verriegelungseinrichtung einen Verriegelungs-Kniehebel, der ein erstes Kniehebelelement, das um eine Kniehebel-Schwenkachse schwenkbar an der stationären Haltekonsole gelagert ist, und ein zweites Kniehebelelement umfasst, das am Schwenkarm angelenkt und in eine die Schwenkbewegung des Schwenkarms blockierende Übertotpunktstellung bringbar ist. Hierdurch kann die Verriegelung, **d. h.** die Schwenkblockade, des Schwenkarms in seiner unteren Schwenkstellung auf besonders einfache Weise durch eine weitere Bewegung des Betätigungshebels erfolgen, wenn der Schwenkarm beim Schließen der Fleischpresse seine untere Schwenkstellung erreicht hat. Die Aufhebung der Verriegelung beim Öffnen der Fleischpresse kann in entsprechender, umgekehrter Weise erfolgen.

Anstelle eines derartigen Verriegelungs-Kniehebels sind auch andere Verriegelungseinrichtungen denkbar, beispielsweise solche, bei denen die Verriegelung automatisch und unter Einsatz einer Schwenkwinkelerkennungseinrichtung erfolgt, welche den Schwenkwinkel des Schwenkarms relativ zu Haltekonsole erfasst.

Gemäß einer vorteilhaften Ausführungsform ist das zweite Kniehebelelement des Verriegelungs-Kniehebels am Schwenkarm mittels einer Führungsachse angelenkt, die in der unteren Schwenkposition des Schwenkarms an einem Anschlag der stationären Haltekonsole anschlägt und sich relativ zu einer Verbindungsgeraden, die durch die Kniehebel-Schwenkachse und eine Kniehebelelement-Verbindungsachse läuft, in der Übertotpunktstellung befindet. Der Anschlag kann dabei vorzugsweise durch die endseitige Begrenzungswand eines bogenförmigen Langlochs der stationären Haltekonsole gebildet werden, durch das sich die am Schwenkarm befestigte Führungsachse hindurch erstreckt.

Gemäß einer vorteilhaften Ausführungsform wirkt der Verriegelungs-Kniehebel mit einem Lösehebel zusammen, der durch eine Schwenkbewegung des Betätigungshebels in Öffnungsrichtung den Verriegelungs-Kniehebel in eine Drehrichtung bewegt, die ein Hochschwenken des Schwenkarms ermöglicht.

Gemäß einer vorteilhaften Ausführungsform weist der Lösehebel ein erstes Ende auf, das am ersten Kniehebelelement des Verriegelungs-Kniehebels befestigt ist, und ein zweites Ende, das in der abgesenkten Endposition der Anpressplatte in Kopplungseingriff mit dem Hubeinrichtungs-Kniehebel bringbar ist und bei einer Öffnungsbewegung des Hubeinrichtungs-Kniehebels eine Öffnungskraft auf den Verriegelungs-Kniehebel überträgt.

Gemäß einer vorteilhaften Ausführungsform ist der Lösehebel an seinem ersten Ende schwenkbar am ersten Kniehebelelement des Verriegelungs-Kniehebels gelagert, wobei das zweite Ende des Lösehebels federnd nachgiebig in eine Ausgangsposition vorgespannt ist, in welcher sich das zweite Ende im Schwenkbereich des Hubeinrichtungs-Kniehebels befindet.

Gemäß einer vorteilhaften Ausführungsform ist das erste Kniehebelelement des Verriegelungs-Kniehebels mittels einer an der stationären Haltekonsole befestigten Feder in Öffnungsrichtung vorgespannt. Hierdurch kann sichergestellt werden, dass der Schwenkarm in seiner maximalen Öffnungsstellung bleibt, solange er nicht mittels des Betätigungshebels nach unten geschwenkt wird.

Gemäß einer vorteilhaften Ausführungsform ist am ersten Kniehebelelement des Hubeinrichtungs-Kniehebels und am ersten Kniehebelelement des Verriegelungs-Kniehebels eine Feder befestigt, welche auf das erste Kniehebelelement des Hubeinrichtung-Kniehebels eine Drehkraft in Öffnungsrichtung ausübt. Hierdurch kann sichergestellt werden, dass die Hubeinrichtung in ihrer oberen Ausgangslage bleibt, solange sie nicht mittels des Betätigungshebels abgesenkt wird.

Gemäß einer vorteilhaften Ausführungsform ist eine Auflageplatten-Höhenverstelleinrichtung vorgesehen, mit der die Auflageplatte höhenverstellbar an der stationären Haltekonsole befestigt ist. Hierdurch kann der Abstand, den die Anpressplatte in ihrer unteren Endstellung zur Auflageplatte einnimmt, und damit die Dicke des gepressten Fleischstücks auf einfache Weise eingestellt bzw. verändert werden. Es ist damit nicht erforderlich, den Schwenkweg des Schwenkarms und/oder den Hubweg der Hubeinrichtung zu verändern, wenn die Pressdicke des Fleischstücks verändert werden soll.

Gemäß einer vorteilhaften Ausführungsform umfasst die Auflageplatten-Höhenverstelleinrichtung eine oder mehrere Einlegeelemente, die zwischen der Auflageplatte und der stationären Haltekonsole zur Festlegung der Höhenposition der Auflageplatte relativ zur stationären Haltekonsole einlegbar sind. Hierdurch ist die Einstellung und Veränderung des Abstands zwischen Anpressplatte und Auflageplatte auf besonders einfache Weise möglich.

Die Erfindung wird nachfolgend anhand der Zeichnungen beispielhaft näher erläutert. Es zeigen:
- Figuren 1 bis 3:: räumliche Darstellungen der erfindungsgemäßen Fleischpresse in einer maximalen Öffnungsposition, Zwischenposition bzw. unteren Endposition der Anpressplatte;
- Figur 4:: eine Explosionsdarstellung der Fleischpresse;
- Figuren 5 bis 7:: Vertikalschnitte durch die Fleischpresse in der maximalen Öffnungsposition, Zwischenposition bzw. unteren Endposition der Anpressplatte; und
- Figur 8:: einen Vertikalschnitt durch die Fleischpresse, wobei ein Zustand gezeigt ist, den die Fleischpresse nach dem Pressvorgang beim Entriegeln des Verriegelungs-Kniehebels einnimmt.

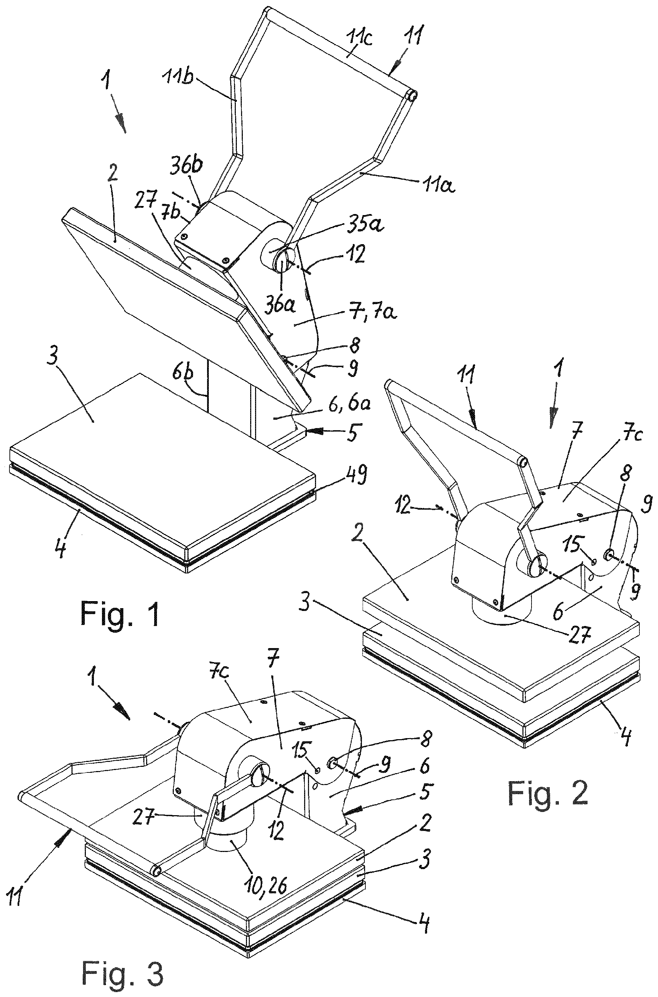

Die Figuren 1 bis 3 zeigen eine manuell zu betätigende Fleischpresse 1 in drei verschiedenen Zuständen bzw. Positionen.

In Figur 1 ist die Fleischpresse 1 maximal geöffnet. Eine Anpressplatte 2 der Fleischpresse 1 befindet sich in einer maximalen Öffnungsposition relativ zu einer darunter angeordneten Auflageplatte 3, die zum Auflegen von nicht dargestellten Fleischstücken dient und auf einer horizontalen Grundplatte 4 einer stationären Haltekonsole 5 befestigt ist.

In der maximalen Öffnungsposition ist die Anpressplatte 2 maximal zur Auflageplatte 3 beabstandet und mit einem Winkel, der im gezeigten Ausführungsbeispiel 60° beträgt, schräg zur Horizontalebene und damit zur Auflageplatte 3 angeordnet. Andere Winkel sind ohne weiteres möglich, insbesondere im Bereich von 40° bis 80°.

Aufgrund der Schrägstellung der Anpressplatte 2 ist in der maximalen Öffnungsposition ein großer Freiraum zwischen Anpressplatte 2 und Auflageplatte 3 vorhanden, der ein behinderungsfreies Auflegen der Fleischstücke auf die Auflageplatte 3 ohne seitliches Wegschwenken der Anpressplatte 2 ermöglicht.

Die stationäre Haltekonsole 5 umfasst ferner einen Vertikalarm 6, der fest mit der Grundplatte 4 verbunden ist und sich von dieser vertikal nach oben erstreckt. Der Vertikalarm 6 weist zwei parallele, zueinander beabstandete Seitenwände 6a, 6b auf, so dass zwischen den Seitenwänden 6a, 6b ein Zwischenraum vorhanden ist, in dem weitere Funktionselemente der Fleischpresse angeordnet werden können, die nachfolgend noch näher beschrieben werden. Die Seitenwände 6a, 6b sind damit Teil eines Gehäuses.

Ein Schwenkarm 7 ist mittels zwei Gelenkbolzen 8 schwenkbar an den Seitenwänden 6a, 6b gelagert und kann auf diese Weise um eine horizontale Schwenkachse 9 relativ zur stationären Haltekonsole 5 geschwenkt werden. In der in Figur 1 gezeigten maximalen Öffnungsstellung erstreckt sich der Schwenkarm 7 vom Vertikalarm 6 der stationären Haltekonsole 5 aus schräg nach oben. Von dieser Stellung aus kann der Schwenkarm 7, wie aus den Figuren 2 und 3 ersichtlich, über einen vorbestimmten Schwenkbereich nach unten in eine untere Schwenkposition geschwenkt werden, in der er dann beispielsweise zumindest im wesentlichen horizontal ausgerichtet ist.

Der Schwenkarm 7 weist zwei parallele, zueinander beabstandete Seitenwände 7a, 7b auf, so dass zwischen den Seitenwänden 7a, 7b ein Zwischenraum vorhanden ist, in dem weitere Funktionselemente der Fleischpresse aufgenommen werden können, die nachfolgend noch näher beschrieben werden. Nach oben hin ist der Schwenkarm 7 durch eine obere Abdeckung 7c abgedeckt. Die Seitenwände 7a, 7b bilden somit zusammen mit der oberen Abdeckung 7c ein Gehäuse.

Die Anpressplatte 2 ist am Schwenkarm 7 mittels einer Hubeinrichtung 10 (Fig. 3) derart befestigt, dass die Anpressplatte 2 insbesondere nach einer Schwenkverriegelung des Schwenkarms 7 relativ zum Schwenkarm 7 in Richtung Auflageplatte 3 bewegt bzw. von dieser wegbewegt werden kann.

Sowohl das Schwenken des Schwenkarms 7 als auch die Betätigung der Hubeinrichtung 10 erfolgt mittels eines manuell zu betätigenden Betätigungshebels 11, der um eine horizontale Schwenkachse 12 schwenkbar in den Seitenwänden 7a, 7b des Schwenkarms 7 gelagert ist. Der Betätigungshebel 11 umfasst zwei Längsstreben 11a, 11b, die an ihrem freien Ende mittels einer Griffstange 11c verbunden sind.

Figur 2 zeigt den Schwenkarm 7 in seiner abgesenkten, unteren Schwenkposition, in der die Anpressplatte 2 parallel zur Auflageplatte 3 ausgerichtet ist und relativ zu dieser eine Zwischenposition einnimmt, da die Hubeinrichtung 10 noch nicht betätigt worden ist. In dieser Zwischenposition ist die Anpressplatte 2 dem Fleischstück bereits stark angenähert, wobei sie Fleischstücke üblicher Dicke jedoch vorzugsweise noch nicht berührt.

Eine Schwenkbewegung des Betätigungshebels 11 um seine Schwenkachse 12 relativ zum Schwenkarm 7 findet beim Schwenken des Schwenkarms 7 von seiner maximalen Öffnungsposition in seine untere Schwenkposition noch nicht statt.

Figur 3 zeigt die Fleischpresse 1, nachdem die Hubeinrichtung 10 mittels des Betätigungshebels 11 derart betätigt worden ist, dass die Anpressplatte 2 relativ zu dem in seiner unteren Schwenkposition verriegelten Schwenkarm 7 nach unten in ihre untere Endposition bewegt worden ist. Während dieser Hubbewegung bleibt die Anpressplatte 2 parallel zur Auflageplatte 3 ausgerichtet. In der unteren Endposition weist die Anpressplatte 2 einen bestimmten, vorgegebenen Minimalabstand zur Auflageplatte 3 auf, der die Dicke des Fleischstücks nach dem Pressen bestimmt.

Die Betätigung der Hubeinrichtung 10 erfolgt dadurch, dass der Betätigungshebel 11, ausgehend von seiner in Figur 2 gezeigten Stellung, relativ zum heruntergeschwenkten, feststehenden Schwenkarm 7 um seine Schwenkachse 12 herum manuell nach unten geschwenkt wird. Nach Beendigung des Pressvorgang können die Hubeinrichtung 10 und der Schwenkarm 7 vorzugsweise federunterstützt und ohne Kraftaufwand wieder in ihre in Figur 1 gezeigte Ausgangsposition zurückgeführt werden.

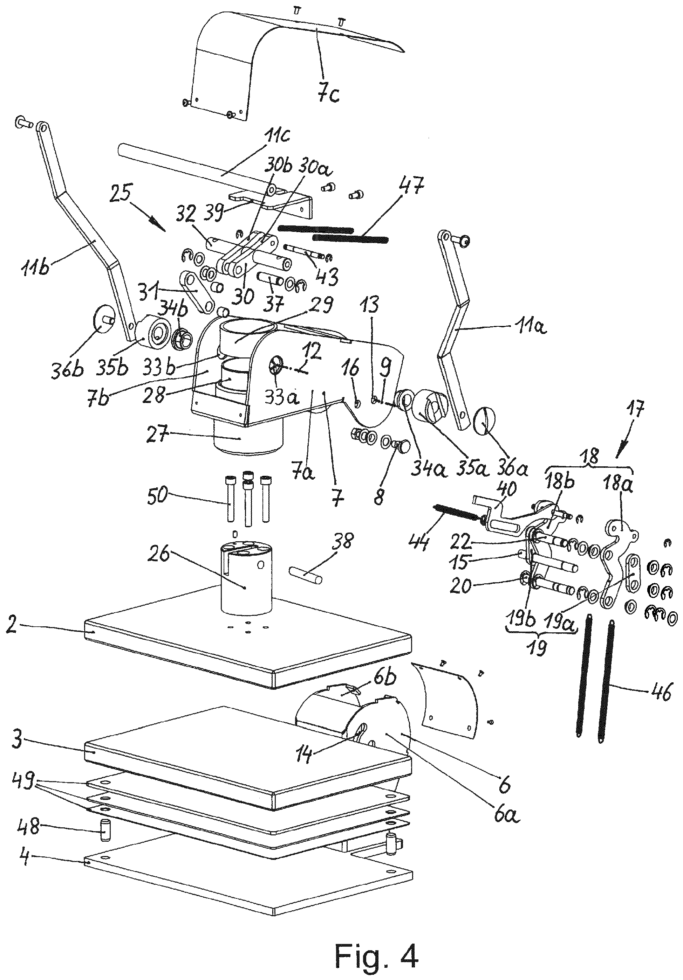

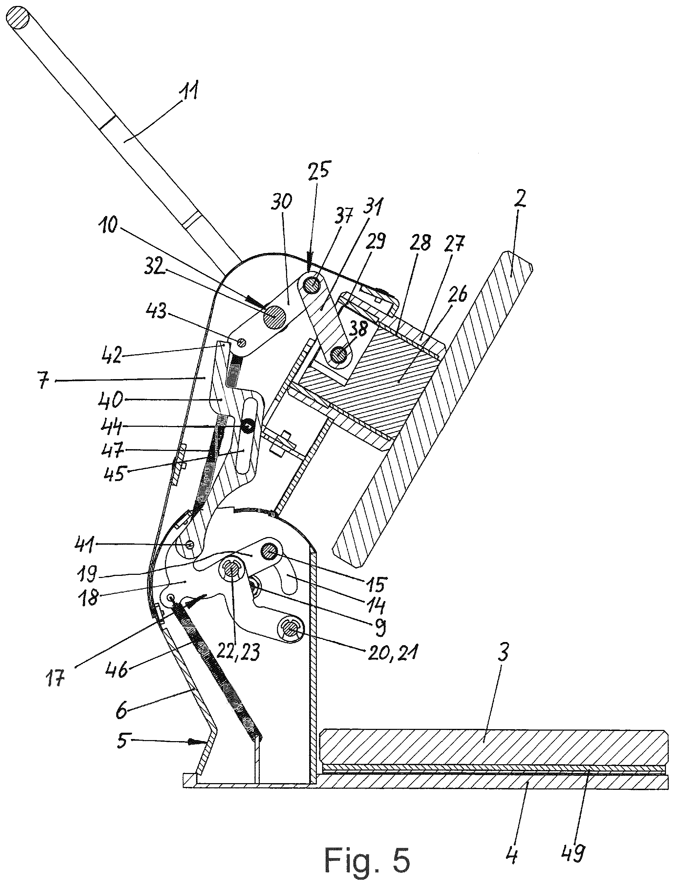

Anhand der Figuren 4 und 5 wird im Folgenden der Aufbau der Fleischpresse 1 näher beschrieben.

Der Schwenkarm 7 ist, wie bereits erwähnt, mittels der Gelenkbolzen 8 schwenkbar am Vertikalarm 6 der stationären Haltekonsole 5 gelagert. Die Seitenwände 7a, 7b des Schwenkarms 7 sind voneinander etwas weiter beabstandet wie die Seitenwände 6a, 6b des Vertikalarms 6, so dass ein Endbereich des Schwenkarms 7 den Vertikalarm 6 von außen übergreift. Figur 4 zeigt eine in der Seitenwand 7a vorgesehene Lagerbohrung 13, durch die einer der Gelenkbolzen 8 hindurchgeführt werden kann.

Der Schwenkbereich des Schwenkarms 7 wird durch zwei kreisbogenförmige Langlöcher 14, die einander gegenüberliegend in den Seitenwänden 6a, 6b des Vertikalarms 6 vorgesehen sind, und eine Führungsachse 15 begrenzt, die sich durch die Langlöcher 14 hindurch erstreckt und beidseitig fest und beabstandet zur Schwenkachse 9 an den Seitenwänden 7a, 7b des Schwenkarms 7 befestigt ist. In Figur 4 ist eine Bohrung 16 in der Seitenwand 7a gezeigt, durch die sich ein Ende der Führungssachse 15 hindurch erstreckt.

Die beiden Enden der Langlöcher 14 bilden somit Anschläge, an denen die Führungssachse 15 in der hochgeschwenkten Ausgangsposition des Schwenkarms 7, d. h. in der maximalen Öffnungsposition der Fleischpresse 1, bzw. in der abgesenkten, unteren Schwenkposition des Schwenkarms 7, anschlägt.

Nach dem Schwenken des Schwenkarms 7 in seine untere Schwenkposition wird der Schwenkarm 7 mittels einer Verriegelungseinrichtung derart verriegelt, dass beim anschließenden Pressvorgang der Schwenkarm 7 nicht mehr in seine angehobene Ausgangsposition zurückschwenken kann. Diese Verriegelungseinrichtung umfasst beim gezeigten Ausführungsbeispiel einen Verriegelungs-Kniehebel 17 mit einem ersten Kniehebelelement 18 und einem zweiten Kniehebelelement 19.

Im gezeigten Ausführungsbeispiel besteht das erste Kniehebelelement 18 aus zwei parallel zueinander angeordneten Kniehebelelementteilen 18a, 18b, während das zweite Kniehebelelement 19 aus zwei parallel zueinander angeordneten Kniehebelelementteilen 19a, 19b besteht.

Das erste Kniehebelelement 18 ist an einem ersten Ende mittels eines querverlaufenden Achselements 20 um eine Kniehebel-Schwenkachse 21 schwenkbar an den Seitenwänden 6a, 6b des Schwenkarms 6 gelagert.

Das zweite Kniehebelelement 19 ist an einem ersten Ende mittels eines querverlaufenden Achselements 22 gelenkig mit einem mittleren Abschnitt des ersten Kniehebelelements 18 verbunden und um eine Kniehebelelement-Verbindungsachse 23 schwenkbar. An einem zweiten Ende ist das Achselement 22 mit der Führungsachse 15 verbunden.

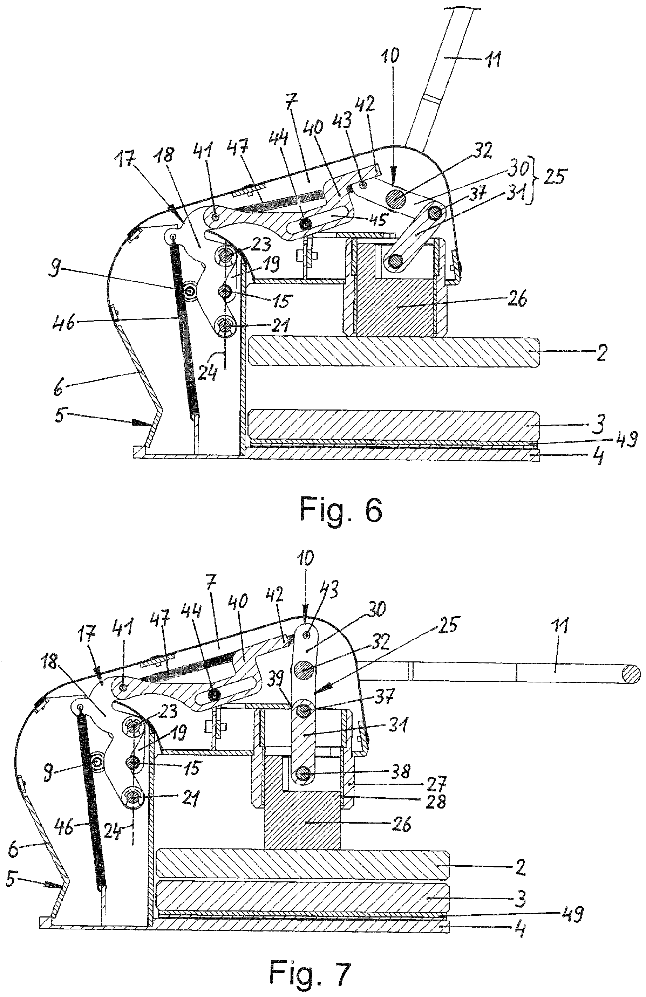

Die bogenförmigen Langlöcher 14 beschreiben einen Kreisbogen um die Schwenkachse 9 des Schwenkarms 7. Die unteren Enden der Langlöcher 14 sind derart angeordnet, dass sich die Führungsachse 15 in der unteren Schwenkposition des Schwenkarms 7, wie aus Figur 6 ersichtlich, relativ zu einer Verbindungsgeraden 24, die durch die Kniehebel-Schwenkachse 21 und die Kniehebelelement-Verbindungsachse 23 verläuft, in einer Übertotpunktstellung, d. h. in Figur 6 geringfügig links neben der Verbindungsgeraden 24, befindet. Wird in dieser Stellung des Verriegelungs-Kniehebels 17 auf das freie Ende des Schwenkarms 7 eine Kraft aufgebracht, die den Schwenkarm 7 nach oben zurück in seine hoch geschwenkte Ausgangsposition zu schwenken versucht, so wird eine derartige Öffnungsbewegung durch den Verriegelungs-Kniehebel 17 blockiert, da die Führungsachse 15 über das zweite Kniehebelelement 19 ein Drehmoment auf das erste Kniehebelelement 18 aufbringt, welches das erste Kniehebelelement 18 nicht in Öffnungsrichtung, d. h. in Figur 6 im Gegenuhrzeigersinn, drängt, sondern am ersten Kniehebelelement 18 ein Drehmoment im Uhrzeigersinn erzeugt, welches verhindert, dass sich die Führungsachse 15 längs der bogenförmigen Langlöcher 14 nach oben bewegen kann.

In den Figuren 5 und 6 befindet sich die Hubeinrichtung 10 in ihrer oberen Hubposition, d. h. die Hubeinrichtung 10 ist nicht in Richtung Auflageplatte 3 ausgefahren.

Die Hubeinrichtung 10 umfasst einen Hubeinrichtungs-Kniehebel 25 und einen Führungskolben 26, der mittels des Hubeinrichtungs-Kniehebels 25 in einer Führungshülse 27 des Schwenkarms 7 verschiebbar ist, um die Anpressplatte 2 in ihre untere Endposition zu bewegen.

Die Führungshülse 27 ist fest am Schwenkarm 7 fixiert und steht über diesen nach unten vor. Die Längsachse der Führungshülse 27 steht rechtwinklig auf der Hauptebene der Anpressplatte 2.

Zur Verminderung der Reibung ist zwischen der Führungshülse 27 und dem Führungskolben 26 eine Gleitlagerbuchse 28 angeordnet. Die Gleitlagerbuchse 28 erstreckt sich zweckmäßigerweise bis zu einem unteren Endbereich der Führungshülse 27 und wird dort durch einen nach innen vorstehenden Bund der Führungshülse 27 axial gehalten.

Im oberen Endbereich der Führungshülse 27 ist eine Distanzbuchse 29 angeordnet, welche eine Axialverschiebung der Gleitlagerbuchse 28 nach oben verhindert.

Die Anpressplatte 2 ist mit dem unteren Ende des Führungskolbens 26 mittels Schrauben 50 (Figur 4) fest verbunden. Zweckmäßigerweise ist der Führungskolben 26 in einem mittigen Bereich der Anpressplatte 2 auf diese aufgesetzt.

In der oberen Hubposition ist der Führungskolben 26 vorzugsweise vollständig in die Führungshülse 27 zurückgezogen. Die Anpressplatte 23 schlägt dabei am unteren Ende der Führungshülse 27 an und begrenzt damit den Hubweg nach oben. Von dieser oberen Hubposition kann der Führungskolben 26, wie in Figur 7 dargestellt, nach unten aus der Führungshülse 27 ausgefahren werden, bis die Anpressplatte 2 ihre untere Endposition erreicht hat.

Der Hubeinrichtungs-Kniehebel 25 umfasst ein erstes Kniehebelelement 30 und ein zweites Kniehebelelement 31.

Wie aus Figur 4 ersichtlich, besteht das erste Kniehebelelement 30 im gezeigten Ausführungsbeispiel aus zwei parallel nebeneinander angeordneten Kniehebelelementteilen 30a, 30b, die fest mit einer Achse 32 verbunden sind. Die Achse 32 erstreckt sich von einem mittleren Bereich der Kniehebelelementteile 30a, 30b quer beidseits nach außen und ist beidseitig in Lagerbohrungen 33a, 33b der Seitenwände 7a, 7b bzw. in Lagerbuchsen 34a, 34b, die in die Lagerbohrungen 33a, 33b eingesetzt sind, drehbar gelagert.

Das erste Kniehebelelement 30 ist über die Achse 32, Mitnehmerelemente 35a, 35b und Klemmschrauben 36a, 36b drehfest mit dem Betätigungshebel 11 verbunden. Ein Verschwenken des Betätigungshebels 11 relativ zum Schwenkarm 7 bewirkt damit ein entsprechendes Verschwenken des ersten Kniehebelelements 30 innerhalb des Schwenkarms 7.

Das zweite Kniehebelelement 31 ist einerseits mittels einer Gelenkachse 37 mit einem ersten Endbereich des ersten Kniehebelelements 30 und andererseits mittels eines Zylinderstifts 38 mit dem Führungskolben 26 verbunden.

Befindet sich der Führungskolben 26 in seiner oberen Hubposition, die in Figur 6 gezeigt ist, sind die beiden Kniehebelelement 30, 31 zueinander relativ stark abgewinkelt, wobei der Winkel vorzugsweise kleiner als 110° ist und beispielsweise zwischen 60 und 90° liegt. Wird dagegen das erste Kniehebelelement 30 mittels des Betätigungshebels 11, ausgehend von der in Figur 6 dargestellten Position, im Uhrzeigersinn geschwenkt, werden die beiden Kniehebelelemente 30, 31 zueinander zunehmend gestreckt, bis sie zueinander einen Winkel von vorzugsweise 180° einnehmen und der Abstand zwischen der Achse 32 und dem Führungskolben 26 maximal wird. Hierdurch wird die Anpressplatte 2 von ihrer Zwischenposition in ihre untere Endposition bewegt, die in Figur 7 dargestellt ist.

Die Schwenkbewegung des Betätigungshebels 11 und damit die Absenkbewegung der Anpressplatte 2 über ihre vorbestimmte untere Endstellung hinaus wird dadurch gestoppt, dass, wie aus Figur 7 ersichtlich, der Hubeinrichtungs-Kniehebel 25 an einem Anschlag 39 des Schwenkarms 7 anschlägt, wenn die maximal zulässige Streckstellung der beiden Kniehebelelemente 30, 31 zueinander erreicht ist.

Aufgrund des Kniehebeleffekts wird die Anpressplatte 2, wenn der Betätigungshebel 11 von der in Figur 6 gezeigten Position relativ zum Schwenkarm 7 in die in Figur 7 dargestellte Position nach unten geschwenkt wird, zu Beginn des Hubwegs zunächst schnell, und mit fortschreitendem Hubweg zunehmend langsamer, jedoch mit zunehmender Kraft, an die Auflageplatte 3 angenähert. Hierdurch ist es möglich, durch kraftsparendes Schwenken des Betätigungshebels 11 relativ zum Schwenkarm 7 den freien Abstand der Anpressplatte 2 zum Fleischstück zunächst sehr schnell zu überwinden und darüber hinaus mit zunehmender Annäherung der Anpressplatte 2 an ihre untere Endposition eine sehr hohe Presskraft aufzubringen.

Um die Fleischpresse 1 nach dem Pressvorgang wieder vollständig öffnen und den Schwenkarm 7 relativ zur stationären Haltekonsole 5 hochschwenken zu können, muss die Schwenkverriegelung des Schwenkarms 7 gelöst werden. Zu diesem Zweck ist ein Lösehebel 40 vorgesehen, der innerhalb des Schwenkarms 7 angeordnet ist.

Der Lösehebel 40 ist am freien Ende des ersten Kniehebelelements 18 des Verriegelungs-Kniehebels 17 mittels eines Gelenkbolzens 41 angelenkt. Von dort erstreckt sich der Lösehebel 40 in Richtung des Hubeinrichtungs-Kniehebels 25. Der Lösehebel 40 weist eine Länge auf und ist derart ausgebildet und angeordnet, dass sein freies Ende 42 in Abhängigkeit der Schwenkstellung der ersten Kniehebelelemente 18, 30 stirnseitig in und außer Eingriff mit einem Mitnehmerbolzen 43 bringbar ist, der in einem Endbereich des ersten Kniehebelelements 30 des Hubeinrichtungs-Kniehebels 25 befestigt ist.

In der in Figur 5 gezeigten maximalen Öffnungsposition ist das freie Ende 42 des Lösehebels 40 mit dem Mitnehmerbolzen 43 des Hubeinrichtungs-Kniehebels 25 nicht in Eingriff. Der Lösehebel 40 wird durch eine quer verlaufende Feder 44, die beidseits am Schwenkarm 7 befestigt ist und sich durch ein Langloch 45 des Lösehebels 40 hindurch erstreckt, in einer vorbestimmten, jedoch federnd nachgiebigen Ausrichtung innerhalb des Schwenkarms 7 gehalten.

Wird der Schwenkarm 7 in die in Figur 6 gezeigte untere Schwenkposition verschwenkt, ohne den Hubeinrichtungs-Kniehebel 25 relativ zum Schwenkarm 7 zu verschwenken, wird jedoch das erste Kniehebelelement 18 des Verriegelungs-Kniehebels 17 im Uhrzeigersinn verschwenkt. Dies hat zur Folge, dass der Lösehebel 40 innerhalb des Schwenkarms 7 verschoben und das freie Ende 42 des Lösehebels 40 über den Mitnehmerbolzen 43 des Hubeinrichtungs-Kniehebels 25 geschoben wird. Das Langloch 45 ermöglicht eine derartige Verschiebung ohne Behinderung durch die Feder 44.

Wird anschließend der Betätigungshebel 11 und damit das erste Kniehebelelement 30 des Hubeinrichtungs-Kniehebels 25 relativ zum Schwenkarm 7 in die in Figur 7 gezeigte Stellung verschwenkt, bewegt sich der Mitnehmerbolzen 43 unter dem freien Ende 42 des Lösehebels 40 hindurch in einen Bereich, der vor dem freien Ende 42 des Lösehebels 40 liegt und der Stirnfläche des Lösehebels 40 gegenüberliegt. Die Feder 44 ermöglicht es dabei, dass das freie Ende 42 des Lösehebels 40 federnd nachgiebig nach oben ausweichen kann.

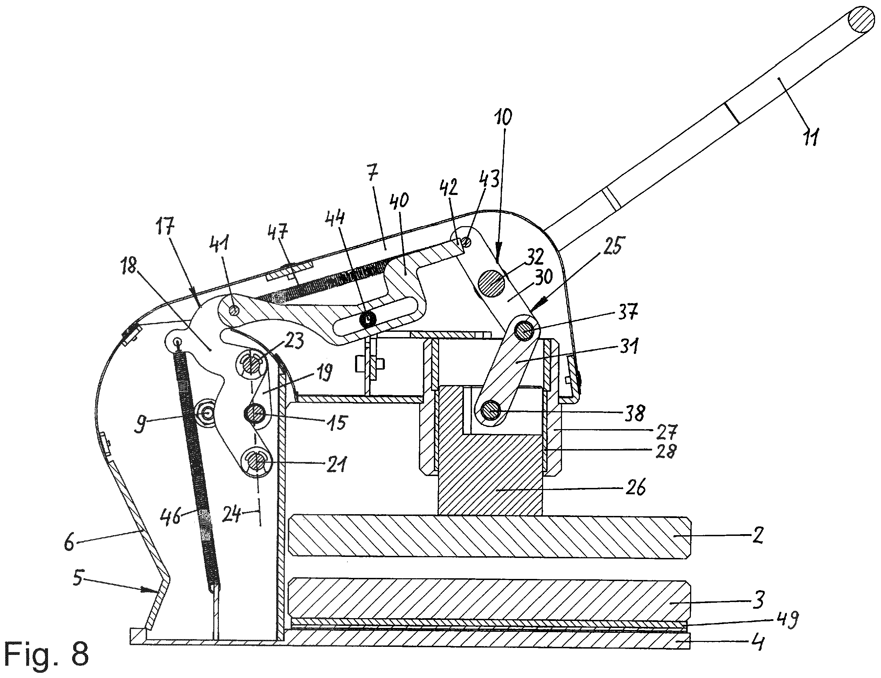

Wird der Betätigungshebel 11 nach Beendigung des Pressvorgangs wieder relativ zum Schwenkarm 7 nach oben geschwenkt und das erste Kniehebelelement 30 des Hubeinrichtungs-Kniehebels 25 im Gegenuhrzeigersinn gedreht, gelangt, wie aus Figur 8 ersichtlich, der Mitnehmerbolzen 43 mit dem freien Ende 42, d. h. mit der Stirnseite, des Lösehebels 40 in Eingriff und schiebt diesen nach links, d. h. in Richtung des Vertikalarms 6 der stationären Haltekonsole 5. Hierdurch wird das erste Kniehebelelement 18 des Verriegelungs-Kniehebels 17 im Gegenuhrzeigersinn, d. h. in Öffnungsrichtung, verschwenkt, wodurch die Übertotpunktstellung des zweiten Kniehebelelements 19 und damit die Schwenkverriegelung des Schwenkarms 7 aufgehoben wird.

Beim weiteren Hochschwenken des Betätigungshebels 11 bzw. Schwenkarms 7 in die maximale Öffnungsposition gelangt der Lösehebels 40 wieder außer Eingriff mit dem Mitnehmerbolzen 43, wie in Figur 5 dargestellt.

Der Schwenkarm 7 ist in seine hochgeschwenkte Ausgangsposition mittels Federn 46 vorgespannt, die einerseits in einem unteren Bereich der stationären Haltekonsole 5 und andererseits am ersten Kniehebelelement 18 des Verriegelungs-Kniehebels 17 befestigt sind. Durch die Kraft dieser Federn 18 wird der Schwenkarm 7 in seiner hochgeschwenkten Ausgangsposition gehalten, solange der Schwenkarm 7 nicht manuell nach unten geschwenkt wird.

Die Hubeinrichtung 10 ist in ihre obere Hubposition mittels Federn 47 vorgespannt, die einerseits am ersten Kniehebelelement 18 des Verriegelungs-Kniehebels 17 und andererseits am ersten Kniehebelelement 30 des Hubeinrichtungs-Kniehebels 25 befestigt sind. Der Führungskolben 26 und damit die Anpressplatte 2 werden auf diese Weise in ihrer zurückgezogenen Ausgangsposition gehalten, solange der Betätigungshebel 11 nicht manuell relativ zum Schwenkarm 7 nach unten geschwenkt wird.

Um zu verhindern, dass beim Schwenken des Schwenkarms 7 von seiner hochgeschwenkten Ausgangsposition in seine untere Schwenkposition gleichzeitig die Hubeinrichtung 10 betätigt wird, wird die Federkraft der Federn 46, 47 vorzugsweise so gewählt, dass die zum Verschwenken des Betätigungshebels 11 relativ zum Schwenkarm 7 benötigte Kraft, d. h. die zur Betätigung der Hubeinrichtung 10 benötigte Kraft, größer ist als die zum Verschwenken des Schwenkarms 7 relativ zur stationären Haltekonsole 5 benötigte Kraft.

Um die Pressdicke der Fleischstücke einstellen und variieren zu können, weist die Fleischpresse 1 eine Auflageplatten-Höhenverstelleinrichtung auf, mit welcher der Minimalabstand, den die Anpressplatte 2 in ihrer unteren Endposition zur Auflageplatte 3 einnimmt, eingestellt werden kann.

Hierzu ist, wie aus Figur 4 ersichtlich, die Auflageplatte 3 mittels Zentrierstiften 48 höhenverstellbar und lösbar an der Grundplatte 4 der stationären Haltekonsole 5 fixiert. Auf diese Weise kann die Auflageplatte 3 nach oben von der Grundplatte 4 abgenommen werden, um Einlegeelemente 49 verschiedener Dicke auf die Zentrierstifte 48 aufzustecken und zwischen der Grundplatte 4 und der Auflageplatte 3 anzuordnen. Vorzugsweise bestehen die Einlegeelemente 49 aus Platten, deren Größe an diejenige der Grundplatte 4 und Auflageplatte 3 angepasst ist.

## Patentansprüche

1. Manuelle Fleischpresse für Fleischstücke, mit
- einer stationären Haltekonsole (5),
- einer mit der stationären Haltekonsole (5) verbundenen Auflageplatte (3) zum Auflegen der Fleischstücke,
- einer Anpressplatte (2), die zwischen einer von der Auflageplatte (3) maximal entfernten Öffnungsposition und einer unteren Endposition bewegbar ist, in der die Anpressplatte (2) einen Minimalabstand zur Auflageplatte (3) einnimmt,
- einer Hubeinrichtung (10) zum Bewegen der Anpressplatte (2) zwischen einer oberen Hubposition und der unteren Endposition über einen sich bis zur unteren Endposition erstreckenden Hubweg, bei dem die Anpressplatte (2) parallel zur Auflageplatte (3) ausgerichtet ist,
- einem Betätigungshebel (11) zum manuellen Bewegen der Anpressplatte (2) relativ zur Auflageplatte (3), wobei
die Hubeinrichtung (10), mit der die Anpressplatte (2) in einer zur Auflageplatte (3) parallelen Ausrichtung bewegbar ist, an einem Schwenkarm (7) befestigt ist, der um eine horizontale Schwenkachse (9) schwenkbar an der stationären Haltekonsole (5) gelagert und zwischen einer hochgeschwenkten Ausgangsposition, in der die Anpressplatte (2) ihre maximale Öffnungsposition einnimmt, und einer unteren Schwenkposition schwenkbar ist, in der die Anpressplatte (2) oberhalb ihrer unteren Endposition parallel zur Auflageplatte (3) und in einer oberhalb ihrer unteren Endposition liegenden Zwischenposition angeordnet ist, **dadurch gekennzeichnet, dass**
der Betätigungshebel (11) sowohl mit dem Schwenkarm (7) als auch mit der Hubeinrichtung (10) in Wirkverbindung steht, derart, dass,
ausgehend von einer maximalen Öffnungsposition der Fleischpresse (1), ein manuelles Schwenken des Betätigungshebels (11) über einen ersten Schwenkbereich zunächst eine Schwenkbewegung des Schwenkarms (7) von seiner hochgeschwenkten Ausgangsposition in seine untere Schwenkposition bewirkt, ohne die Anpressplatte (2) mittels der Hubeinrichtung (10) in ihre untere Endposition zu bewegen, und ein manuelles Schwenken des Betätigungshebels (11) über einen an den ersten Schwenkbereich anschließenden zweiten Schwenkbereich eine Betätigung der Hubeinrichtung (10) bewirkt, derart, dass die Anpressplatte (2) längs des Hubwegs parallel zur Auflageplatte (3) in ihre untere Endposition bewegt wird.

2. Manuelle Fleischpresse nach Anspruch 1, **dadurch gekennzeichnet, dass** die Hubeinrichtung (10) einen mit der Anpressplatte (2) verbundenen Führungskolben (26) umfasst, der in einer Führungshülse (27) des Schwenkarms (7) längsverschiebbar geführt ist.

3. Manuelle Fleischpresse nach Anspruch 2, **dadurch gekennzeichnet, dass** die Hubeinrichtung (10) einen Hubeinrichtungs-Kniehebel (25) zum Verschieben des Führungskolbens (26) relativ zum Schwenkarm (7) umfasst, wobei der Hubeinrichtungs-Kniehebel (25) mittels des Betätigungshebels (11) betätigbar ist.

4. Manuelle Fleischpresse nach Anspruch 3, **dadurch gekennzeichnet, dass** der Betätigungshebel (11) schwenkbar am Schwenkarm (7) gelagert und drehfest mit einem ersten Kniehebelelement (30) des Hubeinrichtungs-Kniehebels (25) verbunden ist, während ein zweites Kniehebelelement (31) des Hubeinrichtungs-Kniehebels (25) einerseits mit dem Führungskolben (26) und andererseits mit dem ersten Kniehebelelement (30) gekoppelt ist.

5. Manuelle Fleischpresse nach Anspruch 4, **dadurch gekennzeichnet, dass** der Hubeinrichtungs-Kniehebel (25) mit einem Anschlag (39) zusammenwirkt, der eine Winkelstellung des ersten und zweiten Kniehebelelements (30, 31) relativ zueinander auf maximal 180° begrenzt.

6. Manuelle Fleischpresse nach einem der vorhergehenden Ansprüche, **dadurch gekennzeichnet, dass** der Schwenkarm (7) in seiner unteren Schwenkposition mittels einer Verriegelungseinrichtung verriegelbar ist, die eine Schwenkbewegung des Schwenkarms (7) blockiert.

7. Manuelle Fleischpresse nach Anspruch 6, **dadurch gekennzeichnet, dass** die Verriegelungseinrichtung einen Verriegelungs-Kniehebel (17) umfasst, der ein erstes Kniehebelelement (18), das um eine Kniehebel-Schwenkachse (21) schwenkbar an der stationären Haltekonsole (5) gelagert ist, und ein zweites Kniehebelelement (19) umfasst, das am Schwenkarm (7) angelenkt und in eine die Schwenkbewegung des Schwenkarms (7) blockierende Übertotpunktstellung bringbar ist.

8. Manuelle Fleischpresse nach Anspruch 7, **dadurch gekennzeichnet, dass** das zweite Kniehebelelement (19) des Verriegelungs-Kniehebels (17) am Schwenkarm (7) mittels einer Führungsachse (15) angelenkt ist, die in der unteren Schwenkposition des Schwenkarms (7) an einem Anschlag der stationären Haltekonsole (5) anschlägt und sich relativ zu einer Verbindungsgeraden (24), die durch die Kniehebel-Schwenkachse (21) und eine Kniehebelelement-Verbindungsachse (23) läuft, in der Übertotpunktstellung befindet.

9. Manuelle Fleischpresse nach Anspruch 7 oder 8, **dadurch gekennzeichnet, dass** der Verriegelungs-Kniehebel (17) mit einem Lösehebel (40) zusammenwirkt, der durch eine Schwenkbewegung des Betätigungshebels (11) in Öffnungsrichtung den Verriegelungs-Kniehebel (17) in eine Drehrichtung bewegt, die ein Hochschwenken des Schwenkarms (7) ermöglicht.

10. Manuelle Fleischpresse nach Anspruch 9, **dadurch gekennzeichnet, dass** der Lösehebel (40) ein erstes Ende aufweist, das am ersten Kniehebelelement (18) des Verriegelungs-Kniehebels (17) befestigt ist, und ein zweites Ende (42), das in der unteren Endposition der Anpressplatte (2) in Kopplungseingriff mit dem Hubeinrichtungs-Kniehebel (25) bringbar ist und bei einer Öffnungsbewegung des Hubeinrichtungs-Kniehebels (25) eine Öffnungskraft auf den Verriegelungs-Kniehebel (17) überträgt.

11. Manuelle Fleischpresse nach Anspruch 10, **dadurch gekennzeichnet, dass** der Lösehebel (40) an seinem ersten Ende schwenkbar am ersten Kniehebelelement (18) des Verriegelungs-Kniehebels (17) gelagert ist, wobei das zweite Ende (42) des Lösehebels federnd nachgiebig in eine Ausgangsposition vorgespannt ist, in welcher sich das zweite Ende (42) im Schwenkbereich des Hubeinrichtungs-Kniehebels (25) befindet.

12. Manuelle Fleischpresse nach einem der Ansprüche 7 bis 11, **dadurch gekennzeichnet, dass** der Schwenkarm (7) in seine hochgeschwenkte Ausgangsposition mittels einer Feder (46) vorgespannt ist, die einerseits mit der stationären Haltekonsole (5) und andererseits mit dem Verriegelungs-Kniehebel (17) in Wirkverbindung ist.

13. Manuelle Fleischpresse nach einem der Ansprüche 6 bis 12, **dadurch gekennzeichnet, dass** die Hubeinrichtung (10) in ihre obere Hubposition mittels einer Feder (47) vorgespannt ist, die einerseits mit dem Verriegelungs-Kniehebel (17) und andererseits mit dem Hubeinrichtungs-Kniehebel (25) in Wirkverbindung ist.

14. Manuelle Fleischpresse nach einem der vorhergehenden Ansprüche, **dadurch gekennzeichnet, dass** eine Auflageplatten-Höhenverstelleinrichtung vorgesehen ist, mit der die Auflageplatte (3) höhenverstellbar an der stationären Haltekonsole (5) befestigt ist.

15. Manuelle Fleischpresse nach Anspruch 15, **dadurch gekennzeichnet, dass** die Auflageplatten-Höhenverstelleinrichtung eine oder mehrere Einlegeelemente (49) umfasst, die zwischen der Auflageplatte (3) und der stationären Haltekonsole (5) zur Festlegung der Höhenposition der Auflageplatte (3) relativ zur stationären Haltekonsole (5) einlegbar sind.

## Claims

1. Manual meat press for meat pieces, with
- a stationary holding console (5),
- a support plate (3) connected to the stationary holding console (5) for placing the meat pieces on,
- a pressing plate (2), which can be moved between an opening position a maximum distance apart from the support plate (3) and a lower end position, in which the pressing plate (2) assumes a minimum distance to the support plate (3),
- a lifting device (10) for moving the pressing plate (2) between an upper lifting position and the lower end position via a lifting path extending up to the lower end position, in which lifting path the pressing plate (2) is aligned in parallel to the support plate (3),
- an actuation lever (11) for manually moving the pressing plate (2) in relation to the support plate (3), wherein
the lifting device (10), with which the pressing plate (2) can be moved in an alignment in parallel to the support plate (3), is fixed on a pivoting arm (7), which is mounted pivotably on the stationary holding console (5) around a horizontal pivot axis (9) and can be pivoted between a high pivoted starting position, in which the pressing plate (2) assumes its maximum opening position, and a lower pivoting position, in which the pressing plate (2) is arranged above its lower end position in parallel to the support plate (3) and in an intermediary position lying above its lower end position, **characterised in that**
the actuation lever (11) is in active connection with both the pivoting arm (7) and the lifting device (10), in such a way that,
starting from a maximum opening position of the meat press (1), a manual pivoting of the actuation lever (11) via a first pivoting region firstly causes a pivoting movement of the pivoting arm (7) from its high pivoted starting position into its lower pivot position without the pressing plate (2) moving into its lower end position by means of the lifting device (10), and a manual pivoting of the actuation lever (11) via a second pivoting region attached to the first pivoting region causes an actuation of the lifting device (10) in such a way that the pressing plate (2) is moved along the lifting path in parallel to the support plate (3) into its lower end position.

2. Manual meat press according to claim 1, **characterised in that** the lifting device (10) comprises a guide piston (26) that is connected to the pressing plate (2) and is guided in a longitudinally shiftable manner in a guide sleeve (27) of the pivoting arm (7).

3. Manual meat press according to claim 2, **characterised in that** the lifting device (10) comprises a lifting device knee lever (25) for shifting the guide piston (26) in relation to the pivoting arm (7), wherein the lifting device knee lever (25) can be actuated by means of the actuation lever (11).

4. Manual meat press according to claim 3, **characterised in that** the actuation lever (11) is pivotably mounted on the pivoting arm (7) and is connected to a first knee lever element (30) of the lifting device knee lever (25) in a rotationally fixed manner, while a second knee lever element (31) of the lifting device knee lever (25) is coupled, on the one hand, to the guide piston (26) and, on the other hand, to the first knee lever element (30).

5. Manual meat press according to claim 4, **characterised in that** the lifting device knee lever (25) interacts with a stop (39) which limits an angular position of the first and second knee lever element (30, 31) relative to each other to a maximum of 180°.

6. Manual meat press according to one of the preceding claims, **characterised in that** the pivoting arm (7) can be locked in its lower pivoting position by means of a locking device, which blocks a pivoting movement of the pivoting arm (7).

7. Manual meat press according to claim 6, **characterised in that** the locking device comprises a locking knee lever (17), which comprises a first knee lever element (18), which is pivotably mounted around a knee lever pivoting axis (21) on the stationary holding console (5), and a second knee lever element (19), which is hinged on the pivoting arm (7) and can be brought into an over dead centre position blocking the pivoting movement of the pivoting arm (7).

8. Manual meat press according to claim 7, **characterised in that** the second knee lever element (19) of the locking knee lever (17) is hinged on the pivoting arm (7) by means of a guide axis (15), which, in the lower pivoting position of the pivoting arm (7), abuts on a stop of the stationary holding console (5) and is in the over dead centre position relative to a straight connection line (24), which runs through the knee lever pivoting axis (21) and a knee lever element connection axis (23).

9. Manual meat press according to claims 7 or 8, **characterised in that** the locking knee lever (17) interacts with a release lever (40), which, by means of a pivoting movement of the actuation lever (11) in the opening direction, moves the locking knee lever (17) in a rotational direction, which enables a high pivoting of the pivoting arm (7).

10. Manual meat press according to claim 9, **characterised in that** the release lever (40) has a first end, which is fixed on the first knee lever element (18) of the locking knee lever (17), and a second end (42), which can be brought into coupling engagement with the lifting device knee lever (25) in the lower end position of the pressing plate (2) and, in an opening movement of the lifting device knee lever (25), transfers an opening force to the locking knee lever (17).

11. Manual meat press according to claim 10, **characterised in that** the release lever (40) is pivotably mounted on the first knee lever element (18) of the locking knee lever (17) on its first end, wherein the second end (42) of the release lever is pretensioned in a springily resilient manner into a starting position, in which the second end (42) is in the pivoting region of the lifting device knee lever (25).

12. Manual meat press according to one of claims 7 to 11, **characterised in that** the pivoting arm (7) is pretensioned into its high pivoted starting position by means of a spring (46), which, on the one hand, is in active connection with the stationary holding console (5) and, on the other hand, with the locking knee lever (17).

13. Manual meat press according to one of claims 6 to 12, **characterised in that** the lifting device (10) is pretensioned into its upper lifting position by means of a spring (47), which, on the one hand, is in active connection with the locking knee lever (17) and, on the other hand, with the lifting device knee lever (25).

14. Manual meat press according to one of the preceding claims, **characterised in that** a support plate height adjustment device is provided, with which the support plate (3) is fixed to the stationary holding console (5) in a height adjustable manner.

15. Manual meat press according to claim 15, **characterised in that** the support plate height adjustment device comprises one or more insertion elements (49), which can be inserted between the support plate (3) and the stationary holding console (5) for setting the height position of the support plate (3) in relation to the stationary holding console (5).

## Revendications

1. Presse à viande manuelle pour pièces de viande, comportant :
- une colonne stationnaire (5),
- une plaque de support (3) raccordée à la colonne stationnaire (5) et destinée à recevoir les pièces de viande,
- une plaque de pression (2) mobile entre une position d'ouverture dans laquelle la plaque de pression (2) est le plus éloigné de la plaque de support (3) et une position terminale basse dans laquelle elle est à une distance minimale de la plaque de support (3),
- un dispositif de levage (10) permettant la mobilité de la plaque de pression (2) entre une position de levage haute et la position terminale basse sur une trajectoire de levage s'étendant jusqu'à la position terminale basse, ladite plaque de pression (2) étant orientée parallèlement à ladite plaque de support (3),
- un levier d'actionnement (11) permettant de déplacer manuellement la plaque de pression (2) par rapport à la plaque de support (3) ; étant entendu que
le dispositif de levage (10), permettant de déplacer la plaque de pression (2) selon une orientation parallèle à la plaque de support (3), est fixé à un bras pivotant (7) qui est monté sur la colonne stationnaire (5) de manière pivotante autour d'un axe de pivotement horizontal (9) et peut pivoter entre une position de départ de pivotement haute, dans laquelle la plaque de pression (2) est à sa position d'ouverture maximale, et une position de pivotement basse, dans laquelle la plaque de pression (2) est disposée au-dessus de sa position terminale basse parallèlement à la plaque de support (3) et dans une position intermédiaire située au-dessus de sa position terminale basse ;
**caractérisée en ce que**
le levier d'actionnement (11) est raccordé fonctionnellement à la fois au bras pivotant (7) et au dispositif de levage (10) de telle façon que,
en partant d'une position d'ouverture maximale de la presse à viande (1), un pivotement manuel du levier d'actionnement (11) sur une première plage de pivotement provoque initialement un pivotement du bras pivotant (7) de sa position de départ de pivotement haute à sa position de pivotement basse, sans faire passer la plaque de pression (2) à sa position terminale basse au moyen du dispositif de levage (10), et un pivotement manuel du levier d'actionnement (11) sur une deuxième plage de pivotement faisant suite à la première plage de pivotement provoque l'actionnement du dispositif de levage (10) de telle façon que la plaque de pression (2) descend, parallèlement à la plaque de support (3), en position terminale basse en suivant ladite trajectoire.

2. Presse à viande manuelle selon la revendication 1, **caractérisée en ce que** le dispositif de levage (10) comprend un piston de guidage (26) qui est raccordé à la plaque de pression (2) et guidé en translation longitudinale dans un manchon de guidage (27) du bras pivotant (7).

3. Presse à viande manuelle selon la revendication 2, **caractérisée en ce que** le dispositif de levage (10) comprend un levier articulé de dispositif de levage (25) permettant la translation du piston de guidage (26) par rapport au bras pivotant (7), ledit levier articulé de dispositif de levage (25) pouvant être actionné au moyen du levier d'actionnement (11).

4. Presse à viande manuelle selon la revendication 3, **caractérisée en ce que** le levier d'actionnement (11) est monté de manière pivotante sur le bras pivotant (7) et est fixé, solidaire en rotation, à un premier élément de levier articulé (30) du levier articulé de dispositif de levage (25), tandis qu'un deuxième élément de levier articulé (31) du levier articulé de dispositif de levage (25) est couplé d'une part au piston de guidage (26) et d'autre part au premier élément de levier articulé (30).

5. Presse à viande manuelle selon la revendication 4, **caractérisée en ce que** le levier articulé de dispositif de levage (25) interagit avec une butée (39) qui limite la position angulaire des premier et deuxième éléments de levier articulé (30, 31) l'un par rapport à l'autre à un maximum de 180°.

6. Presse à viande manuelle selon l'une des revendications précédentes, **caractérisée en ce que** le bras pivotant (7) peut être verrouillé dans sa position de pivotement basse au moyen d'un dispositif de verrouillage qui bloque un pivotement du bras pivotant (7).

7. Presse à viande manuelle selon la revendication 6, **caractérisée en ce que** le dispositif de verrouillage comprend un levier articulé de verrouillage (17) comprenant un premier élément de levier articulé (18) qui est monté sur la colonne stationnaire (5) de manière pivotante autour d'un axe de pivotement de levier articulé (21), et un deuxième élément de levier articulé (19) monté articulé au bras pivotant (7) et susceptible d'être amené dans une position de rappel qui bloque le pivotement du bras pivotant (7).

8. Presse à viande manuelle selon la revendication 7, **caractérisée en ce que** le deuxième élément de levier articulé (19) du levier articulé de verrouillage (17) est monté articulé au bras pivotant (7) au moyen d'un axe de guidage (15) qui, dans la position de pivotement basse du bras pivotant (7), bute contre une butée de la colonne stationnaire (5) et qui, se trouve en position de rappel par rapport à une droite de liaison (24) passant par l'axe de pivotement de levier articulé (21) et un axe de liaison d'élément de levier articulé (23).

9. Presse à viande manuelle selon la revendication 7 ou 8, **caractérisée en ce que** le levier articulé de verrouillage (17) interagit avec un levier de déverrouillage (40) qui, par le biais d'un pivotement du levier d'actionnement (11) dans le sens de l'ouverture, déplace le levier articulé de verrouillage (17) dans un sens de rotation qui permet un pivotement du bras pivotant (7) vers le haut.

10. Presse à viande manuelle selon la revendication 9, **caractérisée en ce que** le levier de déverrouillage (40) présente une première extrémité fixée au premier élément de levier articulé (18) du levier articulé de verrouillage (17), et une deuxième extrémité (42) qui peut s'engrener avec le levier articulé de dispositif de levage (25) dans la position terminale basse de la plaque de pression (2) et qui transmet une force d'ouverture au levier articulé de verrouillage (17) lors d'un mouvement d'ouverture du levier articulé de dispositif de levage (25).

11. Presse à viande manuelle selon la revendication 10, **caractérisée en ce que** le levier de déverrouillage (40) est monté de manière pivotante, par sa première extrémité, au premier élément de levier articulé (18) du levier articulé de verrouillage (17), ladite deuxième extrémité (42) du levier de déverrouillage étant précontrainte de manière élastique dans une position de départ dans laquelle la deuxième extrémité (42) est située dans la plage de pivotement du levier articulé de dispositif de levage (25).

12. Presse à viande manuelle selon l'une des revendications 7 à 11, **caractérisée en ce que** le bras pivotant (7) est précontraint dans sa position de départ de pivotement haute au moyen d'un ressort (46) qui est raccordé fonctionnellement d'une part à la colonne stationnaire (5) et d'autre part au levier articulé de verrouillage (17).

13. Presse à viande manuelle selon l'une des revendications 6 à 12, **caractérisée en ce que** le dispositif de levage (10) est précontraint dans sa position de levage haute au moyen d'un ressort (47) qui est raccordé fonctionnellement d'une part au levier articulé de verrouillage (17) et d'autre part au levier articulé de dispositif de levage (25).

14. Presse à viande manuelle selon l'une des revendications précédentes, **caractérisée en ce qu'**il est prévu un dispositif de réglage de la hauteur de la plaque de support, avec lequel la plaque de support (3) est fixée à la colonne stationnaire (5) de manière réglable en hauteur.

15. Presse à viande manuelle selon la revendication 15, **caractérisée en ce que** le dispositif de réglage de la hauteur de la plaque de support comprend un ou plusieurs éléments d'insertion (49) qui peuvent être insérés entre la plaque de support (3) et la colonne stationnaire (5) pour définir la position en hauteur de la plaque de support (3) par rapport à la colonne stationnaire (5).
